# EUROPEAN PATENT APPLICATION

(11) **EP 3 716 188 A1**
(43) Date of publication of application: **30.09.2020**
(21) Application number: 18882090.6
(22) Date of filing: 19.11.2018
(51) Int. Cl.: G06Q 30/06

(54) **ORDER SECONDARY ALLOCATION AND INFORMATION SHARING METHOD, AND RELATED SYSTEM AND DEVICE**

(30) Priority: 24.11.2017 CN 201711194225
(71) Applicant: NIO Nextev Limited, Central, Hong Kong (HK)
(72) Inventor: XU, Xu, Shanghai 201804 (CN)
(74) Representative: Vossius & Partner Patentanwälte Rechtsanwälte mbB
(86) International application number: PCT/CN2018/116126
(87) International publication number: WO 2019/101026

(57) **Abstract**

The invention relates to the technical field of communications, and in particular to order secondary allocation and information sharing methods, and a related system and device. In order to improve the overall service efficiency of a team, the invention provides the order secondary allocation method and the information sharing method, wherein after orders are allocated, a first execution terminal, if happening to come across a served object corresponding to a second order during a process of searching for a served object corresponding to a first order, is permitted to initiate an order secondary allocation request such that the second order may be executed as soon as possible, and allocates the first order to an execution terminal with the shortest time to execute the first order, or the shortest distance, or the optimal combination of time and distance among other execution terminals on one hand; and the first terminal may share position information of the served object corresponding to the second order on the other hand, which is conducive to smooth execution of the second order. By means of the above method, the overall service efficiency is improved, and the operating cost is reduced.

## Description

### Technical Field

The invention relates to the technical field of communications, and in particular to order secondary allocation and information sharing methods, and a related system and device.

### Background Art

In the new business model, a working person is often required to provide a service at a place designated by a user. After the user places an order, the working person needs to arrive at a place where a served object is. During this process, the following problems may occur:
(1) the working person spends plenty of time because he/she is not familiar with the place of where the served object is;
(2) due to factors such as complex distribution of roads and buildings in a target place, and incomplete information filled in by the user, it is difficult to find the target place, and takes a long time, thus affecting the time for the whole service; and
(3) the working person, when first finds the place where a served object of other user order is, can neither switch orders nor share information to help other working persons to save service time.

### Summary of the Invention

To solve the above problems in the prior art, the invention provides order secondary allocation and information sharing methods, and a related system and device, which saves the time spent by a working person in searching for a served object, improves the overall service efficiency, and reduces the operating cost.

In one aspect of the invention, there is provided an order secondary allocation method, which comprises:
conducting task secondary allocation if a first execution terminal comes across a served object corresponding to a second order during a process of searching for a served object corresponding to a first order; and
allocating the second order to the first execution terminal through the task secondary allocation.

Preferably, the first execution terminal is a current execution terminal;
the first order is an order allocated by the first execution terminal;
the second order is an order allocated by a second execution terminal; and
the second execution terminal is any other execution terminal distinguished from the current execution terminal.

Preferably, said "allocating the second order to the first execution terminal" specifically comprises:
initiating, by the first execution terminal, a secondary allocation request to a server side; and determining, by the server side, whether the secondary allocation request meets preset secondary allocation conditions, and if yes, the server side allocating the second order to the first execution terminal and notifying the second execution terminal, otherwise, returning rejection information to the first execution terminal.

Preferably, before the first execution terminal comes across the second served object corresponding to the second order during the process of searching for the served object corresponding to the first order, the order secondary allocation method further comprises:
obtaining and displaying, by the first execution terminal, information of various orders to be executed.

Preferably, said obtaining and displaying, by the first execution terminal, information of various orders to be executed specifically comprises:
matching, by the server side according to geographic positions of served objects of the various orders to be executed, a preset region for each order to be executed, and periodically pushing, at a preset time interval, information of each order to be executed to various execution terminals located in a matched region; and
obtaining and displaying, by the first execution terminal, the information pushed by the server side.

Preferably, the preset secondary allocation conditions comprise: the second order is an order to be executed, and the second execution terminal has not yet reached a preset region matched with the second order.

Preferably, after "notifying the second execution terminal", the order secondary allocation method further comprises:
re-allocating, by the server side, an execution terminal for the first order.

Preferably, said re-allocating, by the server side, an execution terminal for the first order specifically comprises:
selecting and allocating, by the server side according to geographic positions and current idle conditions of various execution terminals and a geographic position of the served object of the first order, an execution terminal with the shortest time to execute the first order, or the shortest distance, or the optimal combination of time and distance.

Preferably, the order secondary allocation method further comprises: sharing position information of the served object corresponding to the second order if the first execution terminal receives the rejection information returned by the server side.

Preferably, the served object is a vehicle to be replenished with power.

Preferably, the order is a power replenishment request order.

In another aspect of the invention, there is provided a storage device in which a plurality of programs are stored, wherein the programs are adapted to be loaded and executed by a processor to implement the order secondary allocation method described above.

In the third aspect of the invention, there is provided a processing device, which comprises: a processor and a storage device.

The processor is adapted to execute various programs.

The storage device is adapted to store a plurality of programs.

The programs are adapted to be loaded and executed by the processor to implement the order secondary allocation method described above.

In the fourth aspect of the invention, there is provided an information sharing method, which comprises:
sharing, when a first execution terminal comes across a served object corresponding to a second order during a process of searching for a served object corresponding to a first order, position information of the served object corresponding to the second order by means of the first execution terminal.

Preferably, the first execution terminal is a current execution terminal;
the first order is an order allocated by the first execution terminal;
the second order is an order allocated by a second execution terminal; and
the second execution terminal is any other execution terminal distinguished from the current execution terminal.

Preferably, said "sharing position information of the served object corresponding to the second order by means of the first execution terminal" specifically comprises:
inputting, by the first execution terminal, current position information of the served object corresponding to the second order and sending the current position information to the server side, and sending, by the server side, the position information to the second execution terminal; or directly sending, by the first execution terminal, the current position information to the second execution terminal.

Preferably, after said "sharing position information of the served object corresponding to the second order by means of the first execution terminal", the information sharing method further comprises:
receiving, by the server side, an order secondary allocation request of the first execution terminal, and conducting task secondary allocation; and allocating the second order to the first execution terminal through the task secondary allocation.

Preferably, before the first execution terminal comes across the second served object corresponding to the second order during the process of searching for the served object corresponding to the first order, the order secondary allocation method further comprises:
obtaining and displaying, by the first execution terminal, information of various orders to be executed;
the information of the orders to be executed comprising: information contained in an order request, and shared position information of served objects corresponding to the orders to be executed.

Preferably, said obtaining and displaying, by the first execution terminal, information of various orders to be executed specifically comprises:
matching, by the server side according to geographic positions of served objects of the various orders to be executed, a preset region for each order to be executed, and periodically pushing, at a preset time interval, information of each order to be executed to various execution terminals located in a matched region; and
obtaining and displaying, by the first execution terminal, the information pushed by the server side.

Preferably, if a server side receives order switching request information returned by the second execution terminal after said "sharing position information of the served object corresponding to the second order by means of the first execution terminal", it is determined whether preset switching conditions are met, and if yes, an execution terminal is re-allocated for the second order, the position information is sent to the re-allocated execution terminal, a third order is allocated to the second execution terminal, and an execution terminal corresponding to the third order is notified, otherwise, switching rejection information is returned.

The order switching request information comprises: ID information of the third order requested to be executed by the second execution terminal.

Preferably, the preset switching conditions comprise: the third order is an order to be executed, and the execution terminal corresponding to the third order has not yet reached a preset region matched with the third order.

Preferably, said re-allocating an execution terminal for the second order specifically comprises:
selecting and allocating, by the server side according to geographic positions and current idle conditions of various execution terminals and a geographic position of the served object of the second order, an execution terminal with the shortest time to execute the second order, or the shortest distance, or the optimal combination of time and distance.

Preferably, the served object is a vehicle to be replenished with power.

Preferably, the order is a power replenishment request order.

In the fifth aspect of the invention, there is provided a storage device in which a plurality of programs are stored, wherein the programs are adapted to be loaded and executed by a processor to implement the information sharing method described above.

In the sixth aspect of the invention, there is provided a processing device, which comprises: a processor and a memory.

The processor is adapted to execute various programs.

The storage device is adapted to store a plurality of programs.

The programs are adapted to be loaded and executed by the processor to implement the information sharing method described above.

In the seventh aspect of the invention, there is provided an order allocation and information sharing system, wherein order secondary allocation is conducted based on the order secondary allocation method described above, and information sharing is conducted based on the information sharing method described above.

The order allocation and information sharing system comprises a server side and a plurality of execution terminals.

The server side is configured to: receive an order request and allocate the order request to the execution terminals; receive an order secondary allocation request sent by the execution terminals and conduct task secondary allocation; and periodically push information of various orders to be executed to the execution terminals.

The execution terminals are configured to: receive an order allocation task and order information sent by the server side, and execute the allocated order task; and initiate, when coming across a served object corresponding to another order, an order secondary allocation request and/or share position information of the served object.

Preferably, the server side comprises: a server side receiving module, an order allocation module, a server side sending module, and an information pushing module.

The server side receiving module is configured to: receive the order request and the order secondary allocation request, and send the order request and the order secondary allocation request to the order allocation module; and receive the shared position information, and send the position information to the server side sending module or the information pushing module.

The order allocation module is configured to: allocate the order task according to the order request, and notify an allocated execution terminal of an allocation result by means of the server side sending module; conduct task secondary allocation according to the order secondary allocation request, and notify a corresponding execution terminal of an allocation result by means of the server side sending module; and send information of the order request to the information pushing module.

The server side sending module is configured to: send the shared position information, the allocation result of the order request, and the allocation result of the order secondary allocation request to the corresponding execution terminal.

The information pushing module is configured to: match, according to geographic positions of served objects of the various orders to be executed, a preset region for each order to be executed, and periodically push, at a preset time interval, information of each order to be executed to various execution terminals located in a matched region; the information of the orders to be executed comprising: information of a corresponding order request, and shared position information of the served objects corresponding to the orders to be executed.

Preferably, the execution terminals comprise: a terminal receiving module, a terminal displaying module, a terminal controlling module, a terminal inputting module, and a terminal sending module.

The terminal receiving module is configured to: receive order task allocation information, pushed information, and the shared position information from the server side, and send the order task allocation information, the pushed information, and the shared position information to the terminal displaying module.

The terminal displaying module is configured to: display the information sent by the terminal receiving module on the terminal.

The terminal controlling module is configured to: determine whether it comes across a served object corresponding to a second order, and if yes, control the terminal sending module to send an order secondary allocation request and/or control the terminal inputting module to conduct information inputting.

The terminal inputting module is configured to: input position information of the served object corresponding to the second order and send the position information to the terminal sending module.

The terminal sending module is configured to: send, according to an instruction of the terminal controlling module, order secondary allocation request information to the server side, or send the position information, sent by the terminal inputting module, of the served object corresponding to the second order to a second execution terminal or the server side for sharing.

The beneficial effects of the invention:
In the order secondary allocation method provided in the invention, after orders are allocated, a first execution terminal, if happening to come across a served object corresponding to a second order during a process of searching for a served object corresponding to a first order, is permitted to initiate an order secondary allocation request such that the second order may be executed as soon as possible, and allocates the first order to an execution terminal with the shortest time to execute the first order, or the shortest distance, or the optimal combination of time and distance among other execution terminals on one hand. In the information sharing method provided in the invention, a working person is allowed to report position information of a served object of other order by means of an execution terminal, thereby saving service time of other working persons. By means of the above method, the overall service efficiency is improved, and the operating cost is reduced.

### Brief Description of the Drawings

FIG. 1 is a schematic flow diagram of embodiment 1 of an order secondary allocation method of the invention;
FIG. 2 is a schematic flow diagram of embodiment 1 of an information sharing method of the invention;
FIG. 3 is a schematic position relationship diagram between related execution terminals and served objects in embodiment 2 of the information sharing method of the invention;
FIG. 4 is a schematic composition diagram of an embodiment of an order allocation and information sharing system of the invention;
FIG. 5 is a schematic composition diagram of modules of a server side in an embodiment of the order allocation and information sharing system of the invention; and
FIG. 6 is a schematic composition diagram of modules of an execution terminal in an embodiment of the order allocation and information sharing system of the invention.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention.

The order secondary allocation method provided in the invention is applied to a process of searching for a served object corresponding to a first order by a first execution terminal. The execution terminal herein refers to a mobile terminal, such as a mobile phone or a PAD, carried by a working person who is executing the order, on which corresponding application programs are installed.

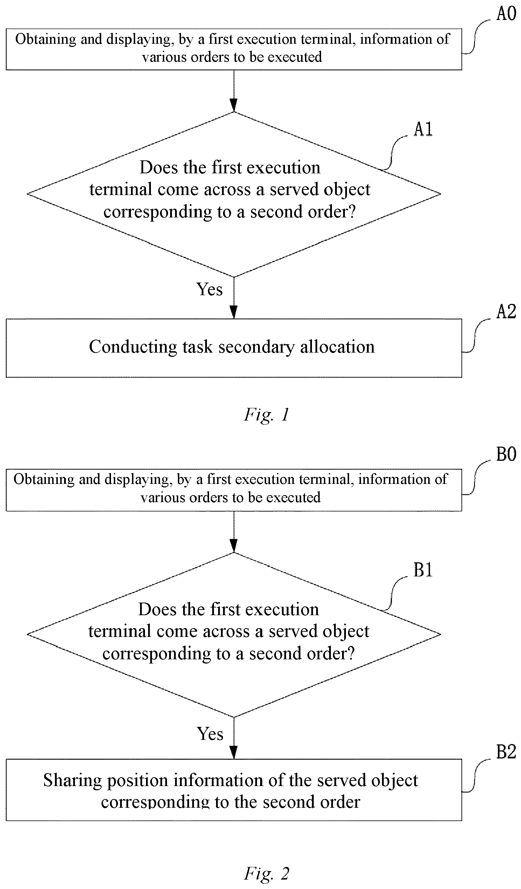

As shown in FIG. 1, Embodiment 1 of the order secondary allocation method of the invention comprises the following steps:
step A1, determining, by a first execution terminal, whether it comes across a served object corresponding to a second order, and if yes, returning to step A2; and
step A2, conducting task secondary allocation.

The second order is allocated to the first execution terminal through the task secondary allocation; the first execution terminal is a current execution terminal; the first order is an order allocated by the first execution terminal; the second order is an order allocated by a second execution terminal; and the second execution terminal is any other execution terminal distinguished from the current execution terminal.

In this embodiment, said "the second order is allocated to the first execution terminal" may mean that the first execution terminal directly grabs the order, that is, grabs into its own task list the second order; then secondary allocation may be conducted by the server side, which is specifically as follows:

initiating, by the first execution terminal, a secondary allocation request to the server side; and determining, by the server side, whether the secondary allocation request meets preset secondary allocation conditions, and if yes, the server side allocating the second order to the first execution terminal and notifying the second execution terminal, otherwise, returning rejection information to the first execution terminal.

The preset secondary allocation conditions comprise: the second order is an order to be executed, and the second execution terminal has not yet reached a preset region matched with the second order.

In this embodiment, position information of the served object corresponding to the second order is shared if the first execution terminal receives rejection information returned by the server side, so as to help an execution terminal (namely the second execution terminal) corresponding to this order to quickly find the served object.

In this embodiment, before step A1, the order secondary allocation method may comprise:
step A0, obtaining and displaying, by the first execution terminal, information of various orders to be executed.

The method for obtaining various orders to be executed may be that a first execution terminal makes an active query through the server side, and may further comprise:
matching, by the server side according to geographic positions of served objects of the various orders to be executed, a preset region for each order to be executed, and periodically pushing, at a preset time interval, information of each order to be executed to various execution terminals located in a matched region; and obtaining and displaying, by the first execution terminal, the information pushed by the server side.

In this embodiment, the served object may be a small item such as a commodity to be repaired or returned, and second hand goods to be acquired door-to-door. The first execution terminal, after being allocated with the second order, may not return the first order, because two or more items may be picked up together en route. If the served object is a bulky item, such as a vehicle to be replenished with power which needs to be driven to a battery swap station, or an item which needs on-site service, such as an appliance which needs door-to-door repair, the first execution terminal, after being allocated with the second order, needs to return the first order, such that other working persons may execute the first order as soon as possible.

Embodiment 2 of an order secondary allocation method of the invention:
steps AO to A2 are the same as those of embodiment 1, and the difference lies in that after step A2, the method further comprising:
step A3, re-allocating, by the server side, an execution terminal for the first order.

This step specifically comprises:
selecting and allocating, by the server side according to geographic positions and current idle conditions of various execution terminals and a geographic position of the served object of the first order, an execution terminal with the shortest time to execute the first order, or the shortest distance, or the optimal combination of time and distance.

The selection method for the execution terminal with the optimal combination of time and distance may comprise: calculating, for each execution terminal, a time required by the execution terminal to execute the first order, and a distance from the execution terminal to the served object corresponding to the first order, respectively; multiplying the calculated time and distance by their own preset weights respectively, and then adding the two products to get a combined evaluation parameter of time and distance; and comparing combined evaluation parameters of time and distance for various execution terminals to select an execution terminal with the minimum value.

In this embodiment, the served object may be a vehicle to be replenished with power, and the order is a power replenishment request order. The served objects may also be other bulky items one of which may be taken away each time or an item which needs on-site service, such as an appliance which needs door-to-door repair.

In an embodiment of a storage device of the invention, the storage device stores a plurality of programs, wherein the programs are adapted to be loaded and executed by a processor to implement the order secondary allocation method described above.

In an embodiment of a processing device of the invention, the processing device comprises: a processor and a storage device.

The processor is adapted to execute various programs. The storage device is adapted to store a plurality of programs. The programs are adapted to be loaded and executed by the processor to implement the order secondary allocation method described above.

An information sharing method provided in the invention is also applied to a process of searching for a served object corresponding to a first order by a first execution terminal. The execution terminal herein refers to a mobile terminal, such as a mobile phone or a PAD, carried by a working person who is executing the order, on which corresponding application programs are installed.

As shown in FIG. 2, Embodiment 1 of an information sharing method of the invention comprises:
step B1, determining, by a first execution terminal, whether it comes across a served object corresponding to a second order, and if yes, the method proceeding to step B2; and
step B2, sharing position information of the served object corresponding to the second order by means of the first execution terminal.

The first execution terminal is a current execution terminal; the first order is an order allocated by the first execution terminal; the second order is an order allocated by a second execution terminal; and the second execution terminal is any other execution terminal distinguished from the current execution terminal.

In this embodiment, the position information of the served object corresponding to the second order may be input by means of the first execution terminal, and directly sent to the second execution terminal. It may also as follow:

the current position information of the served object corresponding to the second order may be input by means of the first execution terminal, and sent to a server side; then the position information is sent to the second execution terminal by the server side (the position information may be sent to the second execution terminal by the server side in a designated direction, or the shared position information may also be attached to corresponding order information by the server side to push same to various execution terminals).

In this embodiment, the first execution terminal, after sending the shared information, may further initiate an order secondary allocation request for task secondary allocation, such that the second order may be executed as soon as possible; and the second order is allocated to the first execution terminal through the task secondary allocation.

In this embodiment, before step B1, the information sharing method further comprises:
step B0, obtaining and displaying, by the first execution terminal, information of various orders to be executed.
the information of the orders to be executed comprising: information contained in an order request, and shared position information of served objects corresponding to the orders to be executed.

The method for obtaining information of various orders to be executed by the first execution terminal may be that a first execution terminal makes an active query through the server side, and may further comprise:
matching, by the server side according to geographic positions of served objects of the various orders to be executed, a preset region for each order to be executed, and periodically pushing, at a preset time interval, information of each order to be executed to various execution terminals located in a matched region; and obtaining and displaying, by the first execution terminal, the information pushed by the server side.

In this embodiment, the served object is a vehicle to be replenished with power, and the order is a power replenishment request order. The served object may also be other items, persons or the like.

Embodiment 2 of an information sharing method of the invention:
if a second execution terminal finds, after receiving shared information, that a served object of a second order is far away from itself, the second execution terminal may initiate an order switching request (which is equivalent to an order secondary allocation request for the second execution terminal). In this embodiment, steps B0 to B2 are the same as those of embodiment 1 described above, and differences lie in subsequent steps B3 and B4:
step B3, determining, by the server side, whether the second execution terminal returns the order switching request, and if yes, proceeding to step B4;
step B4, determining whether preset switching conditions are met, and if yes, re-allocating an execution terminal for the second order, sending the position information to the re-allocated execution terminal, allocating a third order to the second execution terminal, and notifying an execution terminal corresponding to the third order, otherwise, returning switching rejection information.

The order switching request information comprises: ID information of the third order requested to be executed by the second execution terminal.

The preset switching conditions comprise: the third order is an order to be executed, and the execution terminal corresponding to the third order has not yet reached a preset region matched with the third order.

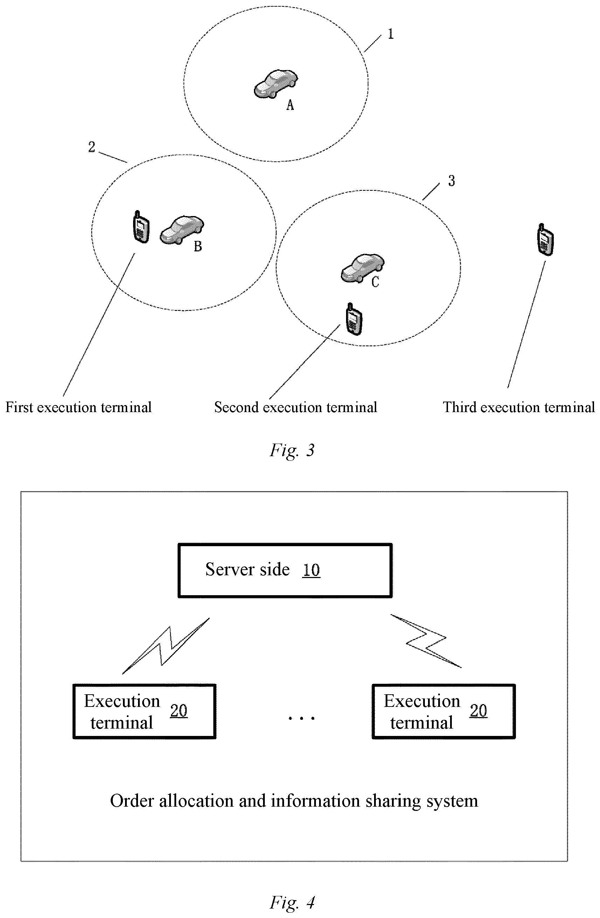

In this embodiment, the position relationship between related execution terminals and served objects is shown in FIG. 3, wherein vehicles A, B, C in the figure are assumed to be served objects corresponding to a first order, a second order and a third order respectively; ellipses 1, 2, 3 in dotted lines represent preset regions matched with the first order, the second order and the third order respectively; and the first order, the second order and the third order are already allocated to a first execution terminal, a second execution terminal and a third execution terminal respectively.

The first execution terminal, when coming across a served object (vehicle B) corresponding to the second order during a process of searching for a served object (vehicle A) corresponding to the first order, shares position information of the served object (vehicle B) corresponding to the second order. The second execution terminal finds, after receiving the shared information, that vehicle B is far away from itself but the served object (vehicle C) corresponding to the third order is closer to itself from information pushed periodically by the server side, so that in order to save time, the second execution terminal initiates an order switching request, namely, requests to execute the third order, and returns the second order at the same time. The server side firstly determines, after receiving the switching request, whether the following preset switching conditions are met: the third order is an order to be executed, and the execution terminal (the third execution terminal) corresponding to the third order has not yet reached the preset region matched with the third order (dotted ellipse 3), and if it is determined that the above conditions are met, an execution terminal is re-allocated for the second order, and the position information related to vehicle B and shared by the first execution terminal is sent to the re-allocated execution terminal; meanwhile, the third order is allocated to the second execution terminal, and the execution terminal (the third execution terminal) corresponding to the third order is notified; and if the preset switching conditions are not met, switching rejection information is returned to the second execution terminal.

In the above example, if there is no other order to be executed after the third execution terminal receives a switching notice, the server side may further allocate a new order to the third execution terminal.

In this embodiment, said re-allocating the execution terminal for the second order specifically comprises:

selecting and allocating, by the server side according to geographic positions and current idle conditions of various execution terminals and a geographic position of the served object of the second order, an execution terminal with the shortest time to execute the second order, or the shortest distance, or the optimal combination of time and distance.

The selection method for the execution terminal with the optimal combination of time and distance comprises: calculating, for each execution terminal, a time required by the execution terminal to execute the second order, and a distance from the execution terminal to the served object corresponding to the second order, respectively; multiplying the calculated time and distance by their own preset weights respectively, and then adding the two products to get a combined evaluation parameter of time and distance; and comparing combined evaluation parameters of time and distance for various execution terminals to select an execution terminal with the minimum value.

In this embodiment, the served object is a vehicle to be replenished with power, and the order is a power replenishment request order.

In an embodiment of another storage device of the invention, the storage device stores a plurality of programs, and the programs are adapted to be loaded and executed by a processor to implement the information sharing method described above.

In an embodiment of another processing device of the invention, the processing device comprises: a processor and a memory.

The processor is adapted to execute various programs. The storage device is adapted to store a plurality of programs. The programs are adapted to be loaded and executed by the processor to implement the information sharing method described above.

In an embodiment of an order allocation and information sharing system of the invention, order secondary allocation is conducted based on the order secondary allocation method described above, and information sharing is conducted based on the information sharing method described above.

As shown in FIG. 4, the order allocation and information sharing system in this embodiment comprises a server side 10 and a plurality of execution terminals 20.

The server side 10 is configured to: receive an order request and allocate the order request to the execution terminals 20; receive an order secondary allocation request sent by the execution terminals 20 and conduct task secondary allocation; and periodically push information of various orders to be executed to the execution terminals 20.

The execution terminals 20 are configured to: receive an order allocation task sent by the server side 10 and order information pushed, and execute the allocated order task; and initiate, when coming across a served object corresponding to another order, an order secondary allocation request and/or share position information of the served object.

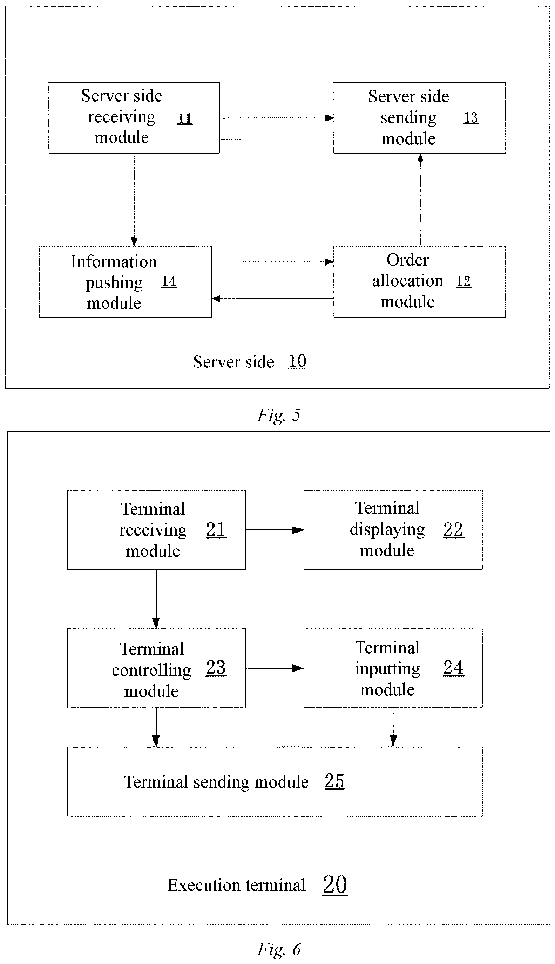

In this embodiment, the server side 10, as shown in FIG. 5, comprises: a server side receiving module 11, an order allocation module 12, a server side sending module 13, and an information pushing module 14.

The server side receiving module 11 is configured to: receive the order request and the order secondary allocation request, and send the order request and the order secondary allocation request to the order allocation module 12; and receive the shared position information, and send the position information to the server side sending module 13 or the information pushing module 14.

The order allocation module 12 is configured to: allocate the order task according to the order request, and notify an allocated execution terminal of an allocation result by means of the server side sending module 13; conduct task secondary allocation according to the order secondary allocation request, and notify a corresponding execution terminal of an allocation result by means of the server side sending module 13; and send information of the order request to the information pushing module 14.

The server side sending module 13 is configured to: send the shared position information, the allocation result of the order request, and the allocation result of the order secondary allocation request to the corresponding execution terminal.

The information pushing module 14 is configured to: match, according to geographic positions of served objects of the various orders to be executed, a preset region for each order to be executed, and periodically push, at a preset time interval, information of each order to be executed to various execution terminals located in a matched region; the information of the orders to be executed comprising: information of a corresponding order request, and shared position information of the served objects corresponding to the orders to be executed.

In this embodiment, the execution terminals 20, as shown in FIG. 6, comprise: a terminal receiving module 21, a terminal displaying module 22, a terminal controlling module 23, a terminal inputting module 24, and a terminal sending module 25.

The terminal receiving module 21 is configured to: receive order task allocation information, pushed information, and the shared position information from the server side, and send the order task allocation information, the pushed information, and the shared position information to the terminal displaying module 22.

The terminal displaying module 22 is configured to: display the information received by the terminal receiving module 21 on the terminal.

The terminal controlling module 23 is configured to: determine whether it comes across a served object corresponding to a second order, and if yes, control the terminal sending module 25 to send an order secondary allocation request and/or control the terminal inputting module 24 to conduct information inputting.

The terminal inputting module 24 is configured to: input position information of the served object corresponding to the second order and send the position information to the terminal sending module 25.

The terminal sending module 25 is configured to: send, according to an instruction of the terminal controlling module 23, order secondary allocation request information to the server side, or send the position information, sent by the terminal inputting module 24, of the served object corresponding to the second order to a second execution terminal or the server side for sharing.

Those skilled in the art should be able to realize that the method steps of the various examples described with reference to the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solution. Those skilled in the art can use different methods to implement the described functions for each particular application, but such implementation should not be considered to be beyond the scope of the invention.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. An order secondary allocation method, **characterized by**
conducting task secondary allocation if a first execution terminal comes across a served object corresponding to a second order during a process of searching for a served object corresponding to a first order; and
allocating the second order to the first execution terminal through the task secondary allocation.

2. The order secondary allocation method according to claim 1, **characterized in that**
the first execution terminal is a current execution terminal;
the first order is an order allocated by the first execution terminal;
the second order is an order allocated by a second execution terminal; and
the second execution terminal is any other execution terminal distinguished from the current execution terminal.

3. The order secondary allocation method according to claim 2, **characterized in that** said "allocating the second order to the first execution terminal" specifically comprises:
initiating, by the first execution terminal, a secondary allocation request to a server side; and determining, by the server side, whether the secondary allocation request meets preset secondary allocation conditions, and if yes, the server side allocating the second order to the first execution terminal and notifying the second execution terminal, otherwise, returning rejection information to the first execution terminal.

4. The order secondary allocation method according to claim 3, **characterized in that** before the first execution terminal comes across the second served object corresponding to the second order during the process of searching for the served object corresponding to the first order, the method further comprises:
obtaining and displaying, by the first execution terminal, information of various orders to be executed.

5. The order secondary allocation method according to claim 4, **characterized in that** said obtaining and displaying, by the first execution terminal, information of various orders to be executed specifically comprises:
matching, by the server side according to geographic positions of served objects of the various orders to be executed, a preset region for each order to be executed, and periodically pushing, at a preset time interval, information of each order to be executed to various execution terminals located in a matched region; and
obtaining and displaying, by the first execution terminal, the information pushed by the server side.

6. The order secondary allocation method according to claim 5, **characterized in that** the preset secondary allocation conditions comprise: the second order is an order to be executed, and the second execution terminal has not yet reached a preset region matched with the second order.

7. The order secondary allocation method according to claim 3, **characterized in that** after "notifying the second execution terminal", the method further comprises:
re-allocating, by the server side, an execution terminal for the first order.

8. The order secondary allocation method according to claim 7, **characterized in that** said re-allocating, by the server side, an execution terminal for the first order specifically comprises:
selecting and allocating, by the server side according to geographic positions and current idle conditions of various execution terminals and a geographic position of the served object of the first order, an execution terminal with the shortest time to execute the first order, or the shortest distance, or the optimal combination of time and distance.

9. The order secondary allocation method according to claim 3, **characterized in that** the method further comprises:
sharing position information of the served object corresponding to the second order if the first execution terminal receives the rejection information returned by the server side.

10. The order secondary allocation method according to any one of claims 1 to 9, **characterized in that** the served object is a vehicle to be replenished with power.

11. The order secondary allocation method according to claim 10, **characterized in that** the order is a power replenishment request order.

12. A storage device in which a plurality of programs are stored, **characterized in that** the programs are adapted to be loaded and executed by a processor to implement an order secondary allocation method of any one of claims I to 11.

13. A processing device, comprising
a processor adapted to execute various programs; and
a storage device adapted to store a plurality of programs;
**characterized in that** the programs are adapted to be loaded and executed by the processor to implement:
an order secondary allocation method of any one of claims 1 to 11.

14. An information sharing method, **characterized by** comprising
sharing, when a first execution terminal comes across a served object corresponding to a second order during a process of searching for a served object corresponding to a first order, position information of the served object corresponding to the second order by means of the first execution terminal.

15. The information sharing method according to claim 14, **characterized in that**
the first execution terminal is a current execution terminal;
the first order is an order allocated by the first execution terminal;
the second order is an order allocated by a second execution terminal; and
the second execution terminal is any other execution terminal distinguished from the current execution terminal.

16. The information sharing method according to claim 15, **characterized in that** said "sharing position information of the served object corresponding to the second order by means of the first execution terminal" specifically comprises:
inputting, by the first execution terminal, current position information of the served object corresponding to the second order and sending the current position information to a server side; and sending, by the server side, the position information to the second execution terminal.

17. The information sharing method according to claim 15, **characterized in that** said "sharing position information of the served object corresponding to the second order by means of the first execution terminal" specifically comprises:
inputting, by the first execution terminal, current position information of the served object corresponding to the second order and sending the current position information to the second execution terminal.

18. The information sharing method according to claim 15, **characterized in that** after said "sharing position information of the served object corresponding to the second order by means of the first execution terminal", the method further comprises:
receiving, by the server side, an order secondary allocation request of the first execution terminal, and conducting task secondary allocation; and allocating the second order to the first execution terminal through the task secondary allocation.

19. The information sharing method according to claim 16, **characterized in that** before the first execution terminal comes across the second served object corresponding to the second order during the process of searching for the served object corresponding to the first order, the method further comprises:
obtaining and displaying, by the first execution terminal, information of various orders to be executed;
the information of the orders to be executed comprising: information contained in an order request, and shared position information of served objects corresponding to the orders to be executed.

20. The information sharing method according to claim 19, **characterized in that** said obtaining and displaying, by the first execution terminal, information of various orders to be executed specifically comprises:
matching, by the server side according to geographic positions of served objects of the various orders to be executed, a preset region for each order to be executed, and periodically pushing, at a preset time interval, information of each order to be executed to various execution terminals located in a matched region; and
obtaining and displaying, by the first execution terminal, the information pushed by the server side.

21. The information sharing method according to claim 15, **characterized in that** if a server side receives order switching request information returned by the second execution terminal after said "sharing position information of the served object corresponding to the second order by means of the first execution terminal", it is determined whether preset switching conditions are met, and if yes, an execution terminal is re-allocated for the second order, the position information is sent to the re-allocated execution terminal, a third order is allocated to the second execution terminal, and an execution terminal corresponding to the third order is notified, otherwise, switching rejection information is returned;
the order switching request information comprising: ID information of the third order requested to be executed by the second execution terminal.

22. The information sharing method according to claim 21, **characterized in that** the preset switching conditions comprise: the third order is an order to be executed, and the execution terminal corresponding to the third order has not yet reached a preset region matched with the third order.

23. The information sharing method according to claim 21, **characterized in that** said re-allocating an execution terminal for the second order specifically comprises:
selecting and allocating, by the server side according to geographic positions and current idle conditions of various execution terminals and a geographic position of the served object of the second order, an execution terminal with the shortest time to execute the second order, or the shortest distance, or the optimal combination of time and distance.

24. The information sharing method according to any one of claims 14 to 23, **characterized in that** the served object is a vehicle to be replenished with power.

25. The information sharing method according to claim 24, **characterized in that** the order is a power replenishment request order.

26. A storage device in which a plurality of programs are stored, **characterized in that** the programs are adapted to be loaded and executed by a processor to implement an information sharing method of any one of claims 14 to 25.

27. A processing device, comprising
a processor adapted to execute various programs; and
a storage device adapted to store a plurality of programs;
**characterized in that** the programs are adapted to be loaded and executed by the processor to implement:
an information sharing method of any one of claims 14 to 25.

28. An order allocation and information sharing system, **characterized in that** order secondary allocation is conducted based on an order secondary allocation method of any one of claims 1 to 11, and information sharing is conducted based on an information sharing method of any one of claims 14 to 25;
the order allocation and information sharing system comprises a server side and a plurality of execution terminals, wherein
the server side is configured to: receive an order request and allocate the order request to the execution terminals; receive an order secondary allocation request sent by the execution terminals and conduct task secondary allocation; and periodically push information of various orders to be executed to the execution terminals; and
the execution terminals are configured to: receive an order allocation task and order information sent by the server side, and execute the allocated order task; and initiate, when coming across a served object corresponding to another order, an order secondary allocation request and/or share position information of the served object.

29. The order allocation and information sharing system according to claim 28, **characterized in that** the server side comprises: a server side receiving module, an order allocation module, a server side sending module, and an information pushing module, wherein
the server side receiving module is configured to: receive the order request and the order secondary allocation request, and send the order request and the order secondary allocation request to the order allocation module; and receive the shared position information, and send the position information to the server side sending module or the information pushing module;
the order allocation module is configured to: allocate the order task according to the order request, and notify an allocated execution terminal of an allocation result by means of the server side sending module; conduct task secondary allocation according to the order secondary allocation request, and notify a corresponding execution terminal of an allocation result by means of the server side sending module; and send information of the order request to the information pushing module;
the server side sending module is configured to: send the shared position information, the allocation result of the order request, and the allocation result of the order secondary allocation request to the corresponding execution terminal; and
the information pushing module is configured to: match, according to geographic positions of served objects of the various orders to be executed, a preset region for each order to be executed, and periodically push, at a preset time interval, information of each order to be executed to various execution terminals located in a matched region; the information of the orders to be executed comprising: information of a corresponding order request, and shared position information of the served objects corresponding to the orders to be executed.

30. The order allocation and information sharing system according to claim 29, **characterized in that** the execution terminal comprise: a terminal receiving module, a terminal displaying module, a terminal controlling module, a terminal inputting module, and a terminal sending module, wherein
the terminal receiving module is configured to: receive order task allocation information, pushed information, and the shared position information from the server side, and send the order task allocation information, the pushed information, and the shared position information to the terminal displaying module;
the terminal displaying module is configured to: display the information sent by the terminal receiving module on the terminal;
the terminal controlling module is configured to: determine whether it comes across a served object corresponding to a second order, and if yes, control the terminal sending module to send an order secondary allocation request and/or control the terminal inputting module to conduct information inputting;
the terminal inputting module is configured to: input position information of the served object corresponding to the second order and send the position information to the terminal sending module; and
the terminal sending module is configured to: send, according to an instruction of the terminal controlling module, order secondary allocation request information to the server side, or send the position information, sent by the terminal inputting module, of the served object corresponding to the second order to a second execution terminal or the server side for sharing.
